Europäisches Patentamt

European Patent Office

Office européen des brevets

(19)

(11) Publication number: **0 328 317**
**A1**

# EUROPEAN PATENT APPLICATION

(12)

(21) Application number: **89301063.7**

(22) Date of filing: **03.02.89**

(51) Int. Cl.4: **A 23 L 1/04**
**C 08 L 5/00**

(30) Priority: **04.02.88 JP 25460/88**

(43) Date of publication of application:
**16.08.89 Bulletin 89/33**

(84) Designated Contracting States:
**AT BE CH DE ES FR GB GR IT LI LU NL SE**

(71) Applicant: **Takeda Chemical Industries, Ltd.**
**27, Doshomachi 2-chome Higashi-ku**
**Osaka-shi Osaka, 541 (JP)**

(72) Inventor: **Konno, Akira**
**284, Oaza-takahama Shimamoto-cho**
**Mishima-gun Osaka 618 (JP)**

**Iida, Atsu**
**13-23, Seimeidohri**
**Abeno-ku Osaka 565 (JP)**

(74) Representative: **Lewin, John Harvey et al**
**ELKINGTON AND FIFE Beacon House 113 Kingsway**
**London WC2B 6PP (GB)**

(54) **Edible films.**

(57) The edible films of this invention, which comprise a curdlan and a water-soluble macromolecular substance, have heat sealability and water solubility and can be used a edible casings for foodstuffs and, when food materials are incorporated in said films, they can be used also as tasting films.

EP 0 328 317 A1

**Description**

## Edible films

This invention relates to an edible film which comprises a curdlan [thermo-gelable β-1,3-glucan type polysaccharide] and a water-soluble macromolecular substance.

Known as edible films in which the curdlan is used are, among others, a film obtained by dissolving the curdlan in an aqueous solution of a substance capable of causing dissolution of the curdlan, for example sodium hydroxide, and then decreasing the quantity of said dissolution-causing substance to thereby cause gelation and film formation (Japanese Patent Publication No. 44865/1973) and a film obtained by dissolving the curdlan in an aqueous solution of sodium hydroxide or the like and then neutralizing the solution with an acid to thereby cause gelation (Japanese Patent Publication No. 45521/1986).

Films produced by dissolving the curdlan in a solution of a chemical such as sodium hydroxide and then neutralizing the curdlan solution obtained with an acid solution or decreasing the quantity of the dissolution-causing substance in the curdlan solution have heat-sealability but are insoluble in water.

Under these circumstances, the present inventors made intensive investigations in an attempt to produce films which can be controlled in both the properties, namely heat sealability and water solubility, and have now completed the present invention.

Thus, the invention provides an edible film which comprises a curdlan and a water-soluble macromolecular substance.

The curdlan is a thermo-gelable β-1,3-glucan type polysaccharide, which is a microbial metabolite composed of glucose units being connected with each others via mostly β-1,3-glucosidic linkages. The curdlan to be used in accordance with the invention includes, among others, the β-1,3-glucan type polysaccharides produced by strains of the genus Alcaligenes or Agrobacterium. Thus, more specifically, the β-1,3-glucan type polysaccharide produced by Alcaligenes faecalis var. myxogenes 10C3K [Agricultural and Biological Chemistry, vol. 30, page 196 (1966)], the β-1,3-glucan type polysaccharide produced by the mutant NTK-u (IFO 13140, ATCC 21680) of Alcaligenes faecalis var. myxogenes 10C3K (Japanese Patent Publication No. 32673/1973) and the β-1,3-glucan type polysaccharide produced by Agrobacterium radiobacter sp. (IFO 13127) and its mutant U-19 (IFO 13126, ATCC 21679) (Japanese Patent Publication No. 32674/1973), for instance, are usable. When cultivated in the conventional manner, generally under aerobic conditions, using, as nutrient sources, carbon sources, nitrogen sources, inorganics and so forth, such microorganisms produce the β-1,3-glucan type polysaccharides usable in the practice of the invention. The thus-produced β-1,3-glucan type polysaccharides can be recovered from the cultures generally by appropriately utilizing such means as dissolution, filtration, neutralization, washing with water, dehydration and drying. For instance, a culture broth containing the β-1,3-glucan type polysaccharide usable in the practice of the invention is supplemented with an alkali, such as an aqueous sodium hydroxide solution, the mixture is stirred to an extent sufficient for dissolution and then subjected to such treatment as centrifugation or filter press filtration using a filter aid, the thus-obtained clear and transparent filtrate is neutralized with an acid, such as hydrochloric acid, sulfuric acid or acetic acid, and the resulting gel-like precipitate is collected by centrifugation, washed with water and spray-dried to give the desired polysaccharide as a white or off-white powder. In the practice of the invention, the curdlan is used generally in the form of a powder. The curdlan may be recovered in the form of a water-containing swollen paste for direct use thereof as such, if such form is fit for the purpose.

The water-soluble macromolecular substance to be used in accordance with the invention includes macromolecules generally soluble in water or warm water at about 0°C to 70°C, such as, for example, polysaccharides extracted from plants (pectin, arabinogalactan, etc.), microorganism-produced polysaccharides (pullulan, xanthan gum, etc), polysaccharides extracted from algae (carrageenan, agar, furcellaran, alginates, etc), plant seeds (locust bean gum, guar gum, tara gum, tamarind gum, etc.), plant exudate polysaccharides (gum arabic, gum tragacanth, gum karaya, gum ghatti, etc.), starches [soluble starches (carboxymethylstarch, phosphorylated starch, etc.), dextrin (straight-chain, branched, cyclic), etc.], konjak (elephant foot), animal proteins (gelatin, casein, etc.), plant proteins (gluten, soybean proteins, etc.), polyamino acids and salts thereof (sodium polyglutamate, etc.), cellulose derivatives (sodium carboxyl cellulose, methylcellulose, etc.), and sodium polyacrylate. Among the water-soluble macromolecular substances mentioned above, pectin, pullulan, gum arabic, dextrin, gelatin and carrageenan are preferred and pectin and pullulan are particularly preferred.

In producing the films according to the invention, the water-soluble macromolecular substance is used generally in a relative amount of about 0.1 to 20 parts by weight, preferably about 0.5 to 15 parts by weight, per part by weight of the curdlan. When the proportion of the water-soluble macromolecular substance is high, the films obtained will have high water solubility and heat sealability.

The method of producing the films according to the invention is now described. An aqueous mixture containing the curdlan and the water-soluble macromolecular substance is extruded in the form of thin films, and the films thus formed are heated for gelation, dried and then wound up, if necessary under tension. Said aqueous mixture can be prepared by admixing the curdlan and the water-soluble macromolecular substance with water in the manner such that the quantity ratio between the curdlan and the water-soluble macromolecular substance falls within the range mentioned above and that the total concentration of the curdlan and the water-soluble macromolecular substance becomes about 1 to 40% by weight, preferably

2

about 2 to 30% by weight.

The aqueous mixture prepared in the above manner should preferably be defoamed in advance by treatment under-reduced pressure, if necessary with addition of a defoaming agent (for example, Toray Industries' silicone SH5510). The defoaming procedure may be carried out by a conventional method.

In carrying out the above production method, said aqueous mixture may be continuously extruded in the thin film form with a constant thickness by the blade coating, reverse coating or kiss reverse technique, for instance. In a preferred mode of practice, said mixture is extruded onto a moving belt with a heat-resistant plastic film laid thereon. Said heat-resistant plastic film is, for example, a polyester film preferably having a corona-treated surface. The thickness of the aqueous mixture, as extruded in the thin film form, may vary depending on the concentration of the curdlan and of the water-soluble macromolecular substance in said aqueous mixture, the rate of movement of the belt onto which said aqueous mixture is extruded, and other factors, but generally is about 50 to 1,000 μm. In cases where said aqueous solution has a high concentration, said aqueous solution as prepared is preferably placed in advance in a tank in a pressure vessel equipped with a pressure gage and then extruded through a constant delivery gear pump and a film extrusion die onto said belt under pressurization effected by introduction of a gas under pressure into the pressure vessel through an inlet for gas under pressure. The linear speed of discharge of the aqueous mixture may vary depending on the concentration of the curdlan and of the water-soluble macromolecular substance, the thickness of the aqueous mixture extruded in the thin film form and other factors but generally is about 2 to 10 m/min.

The means of heating may be any appropriate one, such as infrared heating, far infrared heating, microwave oven heating, or steam heating.

The drying and moisture conditioning should be performed in a manner such that the finished films should generally have a moisture content of about 10 to 20%, for example by using hot air.

When the film formed in the above manner is wound up under tension, a film which is satisfactory in tensile strength, elongation, tear strength and other features can be obtained. The tension to be applied may vary depending on the concentration of the aqueous mixture, the thickness of the thin film extruded, the thickness of the final product film and other factors. In most instances, however, it is advisable to employ a winding speed about 1 to 3 times the belt speed on the site of aqueous mixture extrusion.

When the film is wound up while the heat-resistant film is peeled off, rolls of the desired film alone are obtained and, when said heat-resistant film is not peeled off in the step of winding up, rolls of a two-layer film are obtained.

The films provided by the present invention have edibility and they may contain foodstuffs unless incorporation of said foodstuffs should result in failure to accomplish the objects of the invention. A foodstuff which is acceptable may be incorporated into the aqueous mixture in the step of preparing said aqueous solution. Thus, for example, when the foodstuff is solid, it may be converted to a comminuted form, a liquid form or a paste form by application of physical means as necessary and then dissolved, suspended or emulsified in said aqueous mixture. When the foodstuff is liquid or paste-like, it may be added as such to the aqueous mixture.

It is also possible to add the foodstuff to water and then add the curdlan and the water-soluble macromolecular substance to the foodstuff-containing water prepared in advance, to give the desired aqueous mixture.

As said foodstuff, there may be mentioned, for example, seasonings such as sodium glutamate, sodium 5'-guanylate, sodium 5'-inosinate and protein hydrolyzates, alcoholic drinks such as wine, brandy and sake, sweetening agents such as sugar, fructose, thick malt syrup, lactitol, maltitol, sorbitol, aspartame and saccharin, acidulants such as citric acid, malic acid, tartaric acid, fumaric acid and ascorbic acid, and, further, color additives, spices, fats and oils, emulsifiers (e.g. glycerin fatty acid esters, sucrose fatty acid esters, etc.), coffee, cocoa, tea, powdered tea, milk, fermented milk, fruits, juices, cereals, fish, roes, meats and vegetables.

The films according to the invention may be used as ham or sausage casings, as films for primary shaping of minced meats, roes, cream croquettes and cakes, as edible wrapping materials for meats, fish, roes, noodles, soba (buckwheat noodles) and cooked rice, and as edible strings or ribbons in shaping kobumaki (rolled tang with dried fish in it), etc., among others.

The films according to the invention as obtained in the above manner generally have a thickness of about 5 to 200 μm. When they contain one or more foodstuffs, they preferably have a thickness of about 10 to 200 μm.

The edible films according to the invention are characterized by their heat sealability and water solubility and can be used as edible casings for foodstuffs and, when food materials are incorporated in said films, they can be used also as tasting films.

The following examples illustrate the invention in further detail. In each example, the curdlan used was a spray-dried powder of thermo-gelable β-1,3-glucan type polysaccharide produced by the mutant NTK-u (IFO 13140, ATCC21680) of Alcaligenes faecalis var. myxogenes 10C3K.

Example 1

One gram of curdlan and 7 g of pectin (of citrus fruit origin; degree of esterification 58%) were added to 92 ml of water, and the resulting aqueous mixture was defoamed under reduced pressure (10-15 mmHg) for about 30 minutes, and spread evenly on a polyester film (PET E5100, 75 μm thick, corona-treated; product of Toyobo) to form a thin film (about 200 μm thick), which was heated for gelation on a steam bath for 30 seconds. This thin-film gel was dried with an electric drier (Matsushita Electric Works model EH511, 1,000 watts) and then peeled off the polyester film. The thus-obtained edible film (20 µm thick) was transparent and heat-sealable. When it was thrown into water and the mixture stirred, it was solubilized in about 1 minute.

Example 2

Five grams of curdlan, 5g of pectin (of citrus fruit origin; degree of esterification 73%) and 2 g of glycol were added to 90 ml of water, and the aqueous mixture obtained was defoamed in the same manner as in Example 1. This defoamed aqueous mixture was spread evenly on a polyester film (PET E5100, 75 µm thick, corona treated; product of Toyobo) to form a thin film (about 200 µm thick), which was heated for gelation on a steam bath for 30 seconds. The thin-film gel was dried with an electric drier (Matushita Electric Works model EH551, 1.000 watts) and then peeled off the polyester film. The thus-obtained edible film was about 20 µm thick, transparent and heat-sealable. When held in the mouth, the film was dissolved and tasted sweet.

Example 3

Curdlan and pullulan (Hayashibara Biochemical Laboratories) were added to distilled water in concentrations of 4 percent by weight and 6 percent by weight, respectively, and the resultant aqueous mixture was defoamed in the same manner as in Example 1. The aqueous mixture was extruded in the form of a thin film (about 260 µm thick) evenly onto a polyester film (PET film, 75 µm thick, corona treated; product of Toyobo) and heated for gelation by means of an infrared radiation lamp (Nippon Glass; 4 kilowatts; about 1 m long) at a film velocity of 3 m/min. This thin-film gel was passed through hot air (92°C, about 10 m) for half drying at a velocity of 3 m/min., then dried in a cylinder drier (temperature 110°C) to a moisture content of about 15-20% and finally peeled off the polyester film and wound up. The thus-obtained edible film was about 20 µm thick, had a feeling of transparency, and heat sealability, and was dissolved when held in the mouth.

Example 4

Three grams of curdlan, 3 g of sodium polyglutamate and 0.5 g of sodium glutamate were added to 94 ml of water, and the resultant aqueous mixture was defoamed in the same manner as in Example 1, spread evenly on a polyester film (PET 5000, 50 µm thick, corona treated; product of Toyobo) to form a thin film (about 200 µm thick), which was heated for gelation under an infrared radiation lamp in the same manner as in Example 3. The thus-obtained thin-film gel was dried to a moisture content of about 15-20% by means of an electric drier (Matsushita Electric Works model EH551; 1,000 watts) and then peeled off the polyester film. The thus-obtained edible film was 20 µm thick, heat-sealable, and soluble in water upon immersion in water.

Examples 5-10

Films were produced by following the procedure of Example 3 except that water-soluble macromolecular substances specified below in Table 1 were used in lieu of pullulan. The films obtained were all comparable in characteristic properties to the film obtained in Example 3.

Table 1

| Example | 5 | 6 | 7 | 8 | 9 | 10 |
|---|---|---|---|---|---|---|
| Water-soluble macromolecular substance | | | | | | |
| Carrageenan | 3 | | | 1 | 3 | |
| Tamarind seed gum | | 2 | | | | |
| Gum arabic | | | 5 | | | 2 |
| Dextrin (cylclic) | | 4 | | 2 | | |
| Konjak | | | 1 | | | 1 |
| Gelatin | 3 | | | | 2 | 3 |
| Gluten | | | | 3 | | |
| Methylcellulose | | | | | 1 | |

Fifty parts by weight of separated eggs of red pepper-seasoned walleye pollack roe were added to 50 parts by weight of an aqueous solution containing 5 percent by weight of curdlan, 3 percent by weight of cyclodextrin and 2 percent by weight of gelatin, and the aqueous mixture obtained was processed into a red pepper-seasoned walleye pollack roe film in the same manner as in Example 3.

**Claims**

1. An edible film which comprises a curdlan and a water-soluble macromolecular substance.

2. The edible film according to claim 1, wherein the water-soluble macromolecular substance is at least one selected from the group consisting of pectin, arabinogalactan, pullulan, xanthan gum, carrageenan, agar, furcellaran, alginate, gum arabic, gum tragacanth, gum karaya, gum ghatti, carboxymethyl starch, phosphorylated starch, dextrin, locust bean gum, guar gum, tara gum, tamarind gum, konjak, gelatin, casein, gluten, soybean protein, sodium polyglutamate, sodium carboxyl cellulose, methylcellulose and polyacrylate.

3. The edible film according to claim 1, wherein the proportion of the water-soluble macromolecular substance to the curdlan is about 0.1 to 20 by weight.

4. The edible film according to claim 1, wherein the film contains a foodstuff selected from the groups consisting of sodium glutamate, sodium 5'-guanylate, sodium 5'-inosinate, protein hydrolyzate, wine, brandy, sake, sugar, fructose, thick malt syrup, lactitol, maltitol, sorbitol, aspartame, saccharin, citric acid, malic acid, tartaric acid, fumaric acid, ascorbic acid, color additive, spice, fats and oils, glycerin fatty acid ester, sucrose fatty acid ester, coffee, cocoa, tea, powdered tea, milk, fermented milk, fruits, juice, cereal, fish, roe, meat and vegetable.

5. The edible film according to claim 1, wherein the film has a moisture content of about 10 to 20 %.

6. The edible film according to claim 1, wherein the film has a thickness of about 10 to 200 μm.

7. A method for producing an edible film which comprises extruding an aqueous mixture containing a curdlan and a water-soluble macromolecular substance in the form of thin film, heating for gelatin, drying and then winding up.

8. The method according to claim 7, wherein the aqueous mixture is prepared by admixing the curdlan and the water-soluble macromolecular substance with water, the admixing proportion of the water-soluble macromolecular substance to the curdlan being about 0.1 to 20 by weight, the total concentration of the curdlan and the water-soluble macromolecule substance in the aqueous mixture being about 1 to 40 % by weight.

9. The method according to claim 7, wherein the heating is infrared heating, far infrared heating, microwave oven heating or steam heating.

10. The method according to claim 7, wherein the film has a moisture content of about 10 to 20 %

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 120 884 (TAKEDA CHEMICAL INDUSTRIES)<br>* Page 2, line 38 - page 3, line 12; page 9, lines 13,14 * & JP-A-48 44 865 (Cat. D)<br>--- | 1-4 | A 23 L    1/04<br>C 08 L    5/00 |
| Y | FR-A-2 085 025 (TAKEDA CHEMICAL INDUSTRIES)<br>* Page 20, lines 8-15; page 23, lines 1-13 * & JP-A-48 32 673 (Cat. D)<br>--- | 1-4 | |
| A | GB-A-2 176 795 (FMC CORP.)<br>* Page 1, lines 17-42 *<br>--- | | |
| A | FR-A-2 537 496 (KABUSHIKI KAISHA HAYASHIBARA SEIBUTSU KAGAKU KENKYUJO)<br>* Abstract *<br>----- | 7 | |

TECHNICAL FIELDS SEARCHED (Int. Cl.4)

C 08 L
A 23 L
C 08 B
A 23 P

The present search report has been drawn up for all claims

| Place of search | Date of completion of the search | Examiner |
|---|---|---|
| THE HAGUE | 11-05-1989 | SOMERVILLE F.M. |

EPO FORM 1503 03.82 (P0401)